# EUROPÄISCHE PATENTANMELDUNG

(11) **EP 0 582 203 A1**
(43) Veröffentlichungstag der Anmeldung: **09.02.1994**
(21) Anmeldenummer: 93112098.4
(22) Anmeldetag: 29.07.1993
(51) Int. Cl.: C08G 18/67, C08K 7/06, B32B 19/00

(54) **Faserverbundwerkstoffe**

(30) Priorität: 07.08.1992 DE 4226150
(71) Anmelder: BASF Aktiengesellschaft, D-67063 Ludwigshafen (DE)
(72) Erfinder: Cramer, Edwin, Dr., D-6700 Ludwigshafen (DE); Folda, Thomas, Dr., D-6730 Neustadt (DE); Schuermann, Helmut, Dr., D-6701 Maxdorf (DE)

(57) **Zusammenfassung**

Die Erfindung betrifft Faserverbundwerkstoffe, die ein Vinylesterurethanharz und Kohlenstoffasern in Form von unidirektionalen oder multidirektionalen Gelegen enthalten, wobei mindestens ein Teil der Comonomeren Carboxyl- oder Anhydridgruppen trägt.

## Beschreibung

Die Erfindung betrifft Faserverbundwerkstoffe aus Vinylesterurethanharzen und Kohlenstoffaser-Gelegen mit verbesserten mechanischen Eigenschaften.

In zunehmendem Maße wird versucht, hochbeanspruchte Komponenten in Transportfahrzeugen, z. B. Antriebswellen oder Blattfedern statt aus Stahl aus den wesentlich leichteren Faser/Kunststoff-Verbundwerkstoffen herzustellen.

Als Kunststoffmatrix für die Faserverbundwerkstoffe wurden bisher praktisch ausschließlich Epoxidharze eingesetzt. Diese haben jedoch den Nachteil, daß die Härtung verhältnismäßig lang dauert, so daß lange Zykluszeiten erforderlich sind. Außerdem müssen wegen toxischer Härtungsmittel in vielen Fällen besondere Vorkehrungen bei der Verarbeitung getroffen werden. Auch die radikalisch härtbaren Vinylesterharze (Umsetzungsprodukte von Polyepoxiden mit Methacrylsäure) wurden schon als geeignete Kunststoffmatrix vorgeschlagen. Hier ist jedoch die Haftfestigkeit Faser/Matrix bei hoher Torsionsbeanspruchung nicht ausreichend.

In der europäischen Patentanmeldung 92 104 742.9 wird vorgeschlagen, zur Herstellung von rohrförmigen Bauteilen, z. B. Kardanwellen, Vinylesterurethanharze (VU-Harze) einzusetzen. Mit den dort bevorzugten Glasfasern erhält man Bauteile mit ausreichend guten mechanischen Eigenschaften. Beim Versuch, unter Verwendung von Kohlenstoffasern höher beanspruchbare, insbesondere steifere Bauteile herzustellen, zeigt sich aber, daß einige mechanische Eigenschaften, vor allem die Zugfestigkeit senkrecht zur Faserrichtung, nicht ausreichend sind.

Der Erfindung lag daher die Aufgabe zugrunde, Faserverbundwerkstoffe aus VU-Harzen und gerichteten Kohlenstoffasern bereitzustellen, die zu hochbeanspruchbaren, steifen Bauteilen mit guter Querzugfestigkeit gehärtet werden können.

Diese Aufgabe wird erfindungsgemäß dadurch gelöst, daß solche VU-Harze eingesetzt werden, bei denen mindestens ein Teil der Comonomeren Carboxyl- oder Anhydridgruppen trägt.

Gegenstand der Erfindung sind demzufolge Faserverbundwerkstoffe, enthaltend
I. 20-80 Gew.-% einer Reaktionsharzmischung aus
   a. 100 Gew.-Teilen eines Vinylesterurethans,
   b. 10-100 Gew.-Teile copolymerisierbarer Monomerer, sowie gegebenenfalls
   c. üblichen Zusatzstoffe, und
II. 80-20 Gew.-% Kohlenstoffasern in Form von unidirektionalen oder multidirektionalen Gelegen,
wobei mindestens ein Teil b₁ der Comonomeren b Carboxyl- oder Anhydridgruppen trägt.

VU-Harze sind an sich bekannt, ebenso Faserverbundwerkstoffe aus VU-Harzen und Kohlenstoffasern. In diversen Patentschriften finden sich lange Listen von Comonomeren, die dem VU zugesetzt werden können. So sind z. B. in US-A 4 413 072 und 4 834 933 VU-Harze beschrieben, bei denen als copolymerisierbares Monomeres neben vielen andern auch Methacrylsäure aufgeführt ist. Auch der Zusatz von Verstärkungsfasern, wie z. B. Kohlenstoffasern wird erwähnt; allerdings liegen die Fasern nicht als unidirektionale oder multidirektionale Gelege, sondern in ungerichteter Form als Kurzfasern oder Matten oder miteinander verbunden als Gewebe vor. Daß die mechanischen Eigenschaften von gehärteten Bauteilen aus VU-Harzen und Kohlenstoffasergelegen verbessert werden, wenn man statt üblicher Comonomerer Methacrylsäure verwendet, kann den beiden Druckschriften jedenfalls nicht entnommen werden.

### A. Isocyanate

Zur Herstellung der VU-Harze im Sinne der Erfindung kommen alle bekannten aliphatischen, cycloaliphatischen und aromatischen Polyisocyanate mit mindestens 2 Isocyanatgruppen pro Molekül in Frage. Beispielhaft für geeignete Isocyanate seien genannt: 4,4-Diphenylmethandiisocyanat (MDI), Hexamethylendiisocyanat, (HDI), Trimethylhexyldiisocyanat (TMDI), Cyclohexyldiisocyanat, Dicyclopentadiendimethylen-diisocyanat, Diisocyanato-diphenylether, Diisocyanatonaphthalin, Diphenylmethan-diisocyanat und Diisocyanato-toluol (TDI) mit ihren Isomerengemischen, Isophorondiisocyanat (IPDI), Dicyclohexyl-diisocyanat, Polyphenylenpolymethylen-polyisocyanate (Roh-MDI);
Triisocyanato-cyclohexan, Triisocyanato-toluol, Triisocyanato-naphthalin, Triisocyanatobiphenyl, Triisocyanato-trimethylbenzol, Triisocyanato-diphenylmethan, Triisocyanto-methyldiphenylmethan, Triisocyanato-triphenylmethan, Triisocyanato-diphenylether, Tetraisocyanato-diphenylsulfid;
urethangruppenhaltige, präpolymere Polyisocyanate wie z. B. das Reaktionsprodukt aus Trimethylolpropan und Diisocyanato-toluol; trimerisierte, Isocyanuratgruppen enthaltende Polyisocyanate z. B. auf Basis HDI, Diphenylmethan-disocyanat und Isophorondiisocyanat;
präpolymere Polyisocyanate, die dargestellt werden durch Reaktion von Polyisocyanaten mit einem Unterschuß an Polyepoxiden in Gegenwart geeigneter Katalysatoren;
Polyisocyanate, die durch Vorreaktion eines Teils der NCO-Gruppen Carbodiimid- und Urethonimineinheiten enthalten;
sowie Präpolymere, die neben NCO-Gruppen Urethdioneinheiten enthalten.

Bevorzugte Isocyanate sind 4,4'-Diphenylmethandiisocyanat sowie das Isomerengemisch aus 2,2'- und 4,4'-Diphenylmethandiisocyanat.

### B1. Mehrwertige Alkohole

Geeignete mehrwertige Alkohole sind: aliphatische Diole, wie Ethandiol-1,2, Propandiol-1,2, Butandiol-1,4, Dipropylenglykol, Neopentylglykol, Trimethylolpropan, Pentaerythrit; alicyclische Diole, wie hydriertes Bisphenol A, Cyclohexandiol, Cyclohexandimethanol und Tricyclohexandimethanol; Phenole wie Bisphenol A, Bisphenol S oder Bisphenol F; aliphatische oder aromatische Polyetherole mit Molekulargewichten bis 5000, z. B. Polyethylenglykol oder Polypropylenglykol; sowie Polyesterole, wobei sowohl gesättigte als auch ungesättigte hydroxyterminierte Polyester in Frage kommen. Grundsätzlich können auch Aminole, wie Ethanolamin, Propanolamin, Diethanolamin, Triethanolamin und Aminophenole mit den Isocyanaten umgesetzt werden. Bevorzugt ist Dipropylenglykol, gegebenenfalls im Gemisch mit Polypropylenglykol.

### B2. Mehrwertige Amine

Als Polyamine können sowohl aliphatische als auch aromatische Amine eingesetzt werden. Beispielhaft seien genannt: Ethylendiamin, Diethylentriamin, Bis-(4-aminocyclohexyl)-methan, Diaminodiphenylmethan, Diaminodiphenylsulfon. Besonders geeignete Amine sind langkettige Amine mit Molekulargewichten von 150 bis 5000. Dazu zählen Etherdiamine wie 4,7-Dioxadecan-1,10-diamin oder Verbindungen der allgemeinen Formel

H₂N-(C₃H₆O)ₘ-C₃H₆-NH₂,

wobei m Zahlen von 2 bis 80 bedeutet, oder Verbindungen der allgemeinen Formel

H₂N-C₃H₆O-[(CH₂)₄O]ₙ-C₃H₆-NH₂,

wobei n Zahlen von 5 bis 80 bedeutet; weiterhin die Aminobenzoesäureester und Anthranilsäureester von Diolen wie z. B. Ethylenglykol, Propylenglykol, Polyethylenglykol, Polypropylenglykol, Polybutadienglykol, Polycaprolactonglykol oder Polytetramethylenetherglykol. Die besonders bevorzugten Aminobenzoesäureester von Polytetramethylenetherglykol haben folgende Struktur: 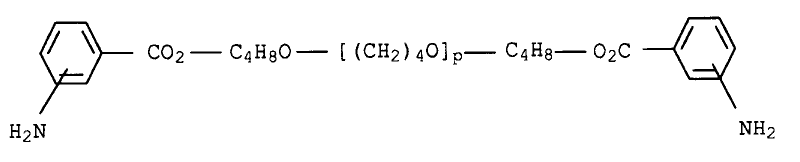
wobei p Zahlen von 5 bis 80 bedeutet.

### C. Hydroxyalkyl-(meth-)acrylate

Zum Aufbau der entständigen Doppelbindungen im Vinylesterurethan werden Hydroxyalkyl-(meth-)acrylate mit den aus A, B₁ und B₂ hergestellten, Isocyanatgruppen enthaltenden Verbindungen umgesetzt. Hydroxyalkyl(meth-)-acrylate werden durch folgende allgemeine Formel beschrieben: 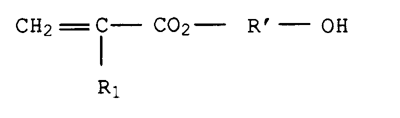
wobei R₁ = H oder CH₃
und R' eine Alkylengruppe bedeuten. Hydroxyalkyl(meth-)acrylate werden durch Umsetzung von (Meth-)Acrylsäure mit Alkylenoxiden wie Ethylen- oder Propylenoxid hergestellt. Geeignete Hydroxyalkyl-(meth-)acrylate im Sinne der Erfindung sind ferner Glycerindi-(meth-)acrylate, Trimethylolpropandi(meth-)acrylate und Pentaerythrittri-(meth-)acrylate. Bevorzugt sind Hydroxypropyl(meth-)acrylat und Hydroxyethyl(meth-)acrylat.

Zur Herstellung der VU-Harze sind verschiedene Verfahren möglich. Einmal kann zunächst das Isocyanat A mit dem Hydroxyalkyl-(meth)-acrylat C im Molverhältnis von etwa 1:0,5 bis 1:3 vorreagiert und gegebenenfalls anschließend mit dem mehrwertigen Alkohol B1 und ggf. B2 im Verhältnis A: (B1 + B2) von 100:10 bis 100:300 vermischt und bei 40 bis 110°C umgesetzt. Anschließend wird die zur Absättigung der freien Isocyanatgruppen notwendige Menge den Hydroxyalkyl-(meth)acrylat C zugefügt. Eine weitere Möglichkeit besteht darin, die Komponenten A, B1, B2 und C gemeinsam in einer Eintopfreaktion umzusetzen. Eventuell vorhandenes, überschüssiges Polyisocyanat reagiert dabei mit dem Hydroxyalkyl(meth)acrylat zu einem verhältnismäßig niedermolekularen Vinylurethan, was zur Einstellung der Viskosität des Harzes ausgenutzt werden kann. Man erhält stets ein Gemisch präpolymerer Vinylesterurethane mit unterschiedlicher Kettenlänge und Molekulargewicht.

Die genannten Umsetzungen können in Substanz oder gegebenenfalls in Monomeren als Lösungsmittel durchgeführt werden. Zur Beschleunigung der Umsetzungen der Isocyanate mit den Alkohol- und Aminoverbindungen können geeignete Katalysatoren, wie sie aus der Polyurethanchemie bekannt sind, eingesetzt werden. Dazu zählen beispielsweise tertiäre Amine wie 1,2-Dimethylimidazol, Diazabicyclooctan, Diazabicyclononan, Triethylendiamin, Metallsalze wie Bleioctoat, Zinnoctoat oder Dibutylzinndilaurat sowie Mischungen von tertiären Aminen und Metallsalzen. Die Katalysatoren werden üblicherweise in Mengen von 0,05 bis 2 Gew.-%, bezogen auf A + B + C, zugegeben. Eine vorzeitige Gelierung der Reaktionsmischung kann durch Zusatz üblicher Inhibitoren wie z. B. Phenothiazin, Hydrochinon, Dimethylhydrochinon, Triphenylphosphit, tert.-Butyl-hydrochinon, Hydrochinonmonomethylether, tert.-Butylbrenzkatechin und p-Benzochinon verhindert werden. Die Inhibitoren werden in Mengen von 0,01 bis 2 Gew.-%, bezogen auf A + B + C, zugesetzt.

Auf 100 Gew.-Teile des Vinylesterurethans a enthält das Reaktionsharz 10 bis 100 Gew.-Teile copolymerisierbarer Monomerer b, von denen mindestens ein Teil b1 Carboxyl- oder Anhydridgruppen trägt. Bevorzugte Comonomere b1 sind Methacrylsäure und Maleinsäureanhydrid, daneben sind auch Acrylsäure, Maleinsäure, Fumarsäure, Tetrahydrophthalsäure, Endomethylentetrahydrophthalsäure, Itaconsäure und Itaconsäureanhydrid geeignet. Das VU-Harz enthält auf 100 Gew.-Teile a vorzugsweise 2 bis 20 Gew.-Teile b1 und daneben noch bis zu 80 Gew.-Teile üblicher Comonomerer b2.

Geeignete Comonomere b2 sind Vinylverbindungen, wie Styrol, α-Methylstyrol, alkylierte Styrole, Divinylbenzol, Vinylacetat und Vinypyridin; Allylverbindungen, wie Diallylphthalat und Triallylcyanurat; Acryl- und Methacrylverbindungen, wie Acrylnitril, (Meth)acrylamid, Methyl(meth)acrylat, Ethylacrylat, Propylacrylat, Butylacrylat, Ethylhexylacrylat, Neopentylglykolacrylat, Ethylenglykoldi(meth)acrylat, Propylenglykoldi(meth)-acrylat, Butandioldiacrylat, Glycerin(meth)crylate, Hydroxyalkyl(meth)acrylate, Acetoacetoxyethylmethacrylat, Dicyclopentadienyloxyethylmethacrylat, alkoxilierte Bisphenol A-di(meth)acrylate und Glycidylmethacrylat, sowie niedermolekulare Maleinimide, wie N-Phenylmaleinimid, N-Alkylmaleinimide und N-Cyclohexylmaleinimid.

Der Reaktionsharzmischung können in Mengen von 2 bis 50 Gew.-%, bezogen auf a), andere härtbare Harze, wie ungesättigte Polyester-, Vinylester-, Bismaleinimid- oder Epoxid-Harze zugemischt werden. Zum Zweck der Zähmodifizierung kann das Vinylesterurethanharz 2 bis 40 Gew.-%, bezogen auf a), eines Thermoplasten, wie Polyamid, Polyester und Polyethersulfon oder eines Kautschuks enthalten.

Zur Aushärtung der Vinylesterurethanharze kommen übliche Polymerisationsinitiatoren in Frage, die in Mengen von 0,1 bis 10 Gew.-%, vorzugsweise von 0,5 bis 3 Gew.-%, bezogen auf a), zugesetzt werden. Als Radikale liefernde Initiatoren seien beispielhaft genannt: Benzoylperoxid, tert.-Butylperoctoat, tert.-Butylperbenzoat, tert.-Butylperoxid, Dicumylperoxid, tert.-Butylcumylperoxid, Di(4-methylbenzoyl)peroxid, Di(tert.-butyl)peroxid oder organische Verbindungen mit einer labilen Kohlenstoff-Kohlenstoff-Bindung.

Die erfindungsgemäßen Faserverbundwerkstoffe enthalten 20 bis 80, vorzugsweise 30 bis 60 Gew.-% Kohlenstoffasern in Form von unidirektionalen oder multidirektionalen Gelegen. Diese sind in Form von Rovings, Faserbündeln oder Einzelfilamente nebeneinander in einer Richtung oder in definierten Winkeln zueinander in verschiedenen Richtungen angeordnet, wobei sie im Gegensatz zu Geweben nicht miteinander verbunden sind. Die Kohlenstoffasern können mit üblichen Schlichten, z. B. auf Basis von Epoxidharzen, ungesättigten Polyesterharzen oder Silanen ausgerüstet sein.

Zur Herstellung von Bauteilen wird bevorzugt das Filament-Winding-Verfahren angewandt. Dabei werden Faserbündel, sogenannte Rovings, durch ein Tränkbad gezogen, dabei mit dem Harz beladen und dann mit Hilfe einer "Computer-Numerical-Controll"-gesteuerten Wickelmaschine definiert auf einem Wickelkern abgelegt. Anschließend wird durch Temperaturerhöhung oder durch Bestrahlung mit Licht das Laminat gehärtet. Mit Hilfe sogenannter Ringfadenaugen ist es möglich, den Wickelkern in einem Arbeitshub vollständig zu bedecken.

Die erfindungsgemäßen Faserverbundwerkstoffe eignen sich zur Herstellung von Automobilteilen, wie z. B. Kardanwellen oder Blattfedern, ferner für Rohre, Walzen oder Druckbehälter und für Bauteile für Flugzeuge, wie z. B. Leitwerkpanels.

### Beispiele

### VU-Harz 1

1000 g (4 mol) 4,4'-Diphenylmethandiisocyanat werden bei 50°C in 800 g Styrol gelöst. Man gibt 2 ml Dibutylzinndilaurat zu und versetzt das Reaktionsgemisch mit 65 g (0,1 mol) Bis-(-3-aminopropyl)-polytetrahydrofuran (Molmasse 650), welches in 400 g Styrol gelöst wird. Nach 10 Minuten werden bei 50°C 108 g (0,8 mol) Dipropylenglykol zugefügt und 15 Minuten nachgerührt. Danach dosiert man 917 g Hydroxypropylmethacrylat (6,4 mol) bei 50 bis 60°C zu der Harzmischung und stabilisiert mit 600 mg Hydrochinon.

### VU-Harz 2

Einem Anteil des VU-Harzes 1 wurden 5 %, bezogen auf sein Gewicht, Methacrylsäure zugesetzt.

### VU-Harz 3

Einem Anteil des VU-Harzes 1 wurden 10 %, bezogen auf sein Gewicht, Maleinsäureanhydrid zugesetzt.

### Herstellung von Rohren

Harzbäder wurden hergestellt, welche die VU-Harze 1 bis 3, sowie einem Zusatz von 0,115 % Dicumylperoxid enthielten.

In einem ersten Schritt werden Faserbänder aus Kohlenstoffasern (CELION 630-500), die mit einer Epoxidharz-Schlichte versehen sind - sogenannte Rovings - von Spulen abgezogen und durch die harzgefüllten Tränkbäder geführt, wo sie mit Harz beladen werden. Zur Einstellung der zu einer guten Benetzung notwendigen niedrigen Harzviskosität wird das Tränkbad auf etwa 35°C beheizt. Mittels Abstreifdüsen wird der optimale Faservolumenanteil, ca. 55 Vol.%, eingestellt. Die Rovingbündel laufen anschließend durch ein Fadenauge, das CNC-gesteuert die Rovings auf einem rotierenden Wickelkern nach vorausberechnetem Muster ablegt. Als günstig hat sich erwiesen, den Wickelkern auf etwa 50°C vorzuwärmen. Dies erniedrigt die Harzviskosität, so daß eingeschlossene Luft leicht aus den Rovingbündel entweichen kann. Die Ziehgeschwindigkeit der Rovings beträgt etwa 10 m/min.

Die Aushärtung der aufgebrachten Laminatschichten erfolgt durch Erwärmen auf ca. 120°C. Nach dem Aushärten des Laminates wird mittels einer hydraulischen Vorrichtung der metallische Wickelkern aus dem ausgehärteten Rohr gezogen. Nach Aufbringen von Trennmittel kann er wieder in die Wickelmaschine eingesetzt und erneut bewickelt werden.

### Messung der Querzugfestigkeit

Die Querzugfestigkeit wurde an gewinkelten, rohrförmigen Proben gemessen. Dabei ergaben sich folgende Werte:

| VU-Harz | Querzugfestigkeit [N·mm-²] |
|---|---|
| 1 | 27 |
| 2 | 49 |
| 3 | 44 |

## Patentansprüche

1. Faserverbundwerkstoffe, enthaltend
I. 20-80 Gew.-% einer Reaktionsharzmischung aus
a. 100 Gew.-Teilen eines Vinylesterurethans,
b. 10-100 Gew.-Teilen copolymerisierbarer Monomerer, sowie gegebenenfalls
c. üblichen Zusatzstoffe, und
II. 80-20 Gew.-% Kohlenstoffasern in Form von unidirektionalen oder multidirektionalen Gelegen,
dadurch gekennzeichnet, daß mindestens ein Teil b₁ der Comonomeren b Carboxyl- oder Anhydridgruppen trägt.

2. Faserverbundwerkstoffe nach Anspruch 1, dadurch gekennzeichnet, daß das Vinylesterurethan ein Reaktionsprodukt ist aus:
A. einem polyfunktionellen Isocyanat,
B1. einem mehrwertigen Alkohol,
B2. gegebenenfalls einem mehrwertigen Amin,
C. einem Hydroxyalkyl-(meth)acrylat,
wobei das Gewichtsverhältnis A : (B₁ + B₂) zwischen 100 : 10 und 100 : 300 betrug und das Äquivalentverhältnis Hydroxyalkyl-(meth)acrylat zu den freien Isocyanatgruppen des Reaktionsprodukts A + B₁ + B₂ zwischen 3 : 1 und 1 : 2 lag.

3. Faserverbundwerkstoffe nach Anspruch 1, dadurch gekennzeichnet, daß das Carboxyl- oder Anhydridgruppen tragende Comonomere b₁ Methacrylsäure oder Maleinsäureanhydrid ist.

4. Faserverbundwerkstoff nach Anspruch 1, dadurch gekennzeichnet, daß die Reaktionsharzmischung I 2 bis 20 Gew.-Teile des Comonomeren b₁ enthält.
